# EUROPEAN PATENT APPLICATION

(11) **EP 4 843 400 A1**
(43) Date of publication of application: **25.11.2026**
(21) Application number: 25382512.9
(22) Date of filing: 21.05.2025
(51) Int. Cl.: A23L 29/30

(54) **METHOD FOR OBTAINING A SYRUP FROM CAROB POD AND THE SYRUP OBTAINED**

(71) Applicant: Productos Sur, S.L., 30169 San Ginés Murcia (ES)
(72) Inventor: HERNÁNDEZ CANOVAS, Juan de Dios, 30169 San Ginés (Murcia) (ES); GUILLÉN LÓPEZ, Isidro, 30169 San Ginés (Murcia) (ES)
(74) Representative: Temiño Ceniceros, Ignacio

(57) **Abstract**

The present invention relates to a method for obtaining a syrup, comprising the steps described below:
1. aqueous infusion of carob pods
2. pressing
3. coarse filtering
4. concentration obtaining a syrup 1,
optionally, further comprising a subsequent enzymatic treatment. The present invention further relates to the syrup obtained, and to its use in the food industry, particularly in the production of beverages, ice cream or confectionery products.

## Description

### TECHNICAL FIELD

The invention falls within the scope of the food industry. More specifically, it relates to a method for transforming carob into a prepared and processed product such as a syrup.

### BACKGROUND

Nowadays, there is a strong interest in reducing the content of free sugars in foods to encourage dietary control of existing obesity rates.

Currently, various natural sweeteners such as honey, agave syrup or maple syrup are available, which can be used as substitutes for refined sweeteners such as sucrose or hydrolysed corn syrup. These natural sweeteners contain, like carob syrups, bioactive compounds of interest as polyphenols, minerals and vitamins. However, most of these natural sweeteners are not able to reduce glucose absorption after intake (low glycaemic index) as in the case of carob syrups, with the exception of agave syrup. Agave syrup has a high fructose content which allows it to have a low glycaemic index, while in the case of carob syrup, the main factors that make this syrup have a low glycaemic index is the content of bioactive compounds such as polyphenols and D-pinitol [1]. Furthermore, carob syrups are the only syrups containing D-pinitol, a polyol that is able to regulate post-prandial insulin secretion in humans and therefore contribute to reducing the risk of developing insulin resistance/type 2 diabetes [2].

Another solution to refined sugars is the use of so-called non-nutritive sweeteners, which are usually artificial sweeteners with the exception of stevia. These sweeteners provide sweetness to food, but they have no nutritional value as they are not digested by humans and are therefore used to provide sweetness to food without the need to include sugars [1]. Examples of these sweeteners include acesulfame-K, aspartame, cyclamate, sucralose or saccharin. Often used in combination with these artificial sweeteners are polyols (sorbitol, xylitol, mannitol, erythritol), compounds with a lower sweetening capacity compared to artificial sweeteners and which should be used in larger quantities. However, the amount of polyols that should be consumed is limited, as humans have poor gastrointestinal tolerance leading to diarrhoea. Furthermore, people with hereditary fructose intolerance do not tolerate food products containing sorbitol (which is metabolised into fructose in the body) and a number of studies have recently appeared which assess the detrimental effect associated with chronic consumption of these sweeteners, such as erythritol, and an increased risk of cardiovascular disease or the effect they have on the human gut microbiota [3].

In summary, these possible sweetening solutions do not have the nutritional characteristics of carob syrups (content of polyphenols, minerals, vitamins and D-pinitol), that can be used as ingredients in the food industry, particularly, in the production of beverages, ice cream and confectionery products.

Based on studies carried out by the World Health Organization (WHO), it has been found that limiting both the amount of sugar added to food and the intake of sugar-sweetened beverages would have beneficial effects on the health of the general population. Accordingly, a new guideline was published in 2018 that recommends reducing the daily intake of free sugars to less than 10% of the total energy intake for both adults and children [4].

Moreover, in a recent scientific opinion published by the EFSA Panel on Dietetic Products, Nutrition and Allergies (NDA), the panel included the following statement: "the consumption of foods/drinks in which non-digestible carbohydrates replaced sugars induced lower post-prandial glycaemic and insulin responses than sugar-containing foods/drinks". Therefore, this replacement proposed by EFSA suggests the need for novel sweeteners in which simple sugars are replaced by non-digestible carbohydrates, such as, for example, fructooligosaccharides [5].

There are currently some patents on syrups made from carob, but these syrups do not have the nutritional characteristics of the sweeteners according to the present invention, as they are obtained only after infusion with water of the chopped carob pod at different temperatures and for different periods of time from those described for this case and subsequently treating the syrup with different physico-chemical processes.

For example, patent ES2303765 discloses a method for obtaining carob syrup after mixing the flour obtained from the carob pulp with water for 5 to 20 minutes, in order to then evaporate the broth containing the sugars at a temperature between 105 and 150°C to obtain the syrup.

Moreover, patents ES 2060544 and ES347260 relate to a syrup obtained from carob pulp by means of an aqueous solution which is subsequently subjected to different physico-chemical processes to separate the fractions containing sugars from those that do not, and obtain a colourless carob syrup. According to the present invention, the sugars are not separated from the non-sugars, obtaining a final product with a different composition, and no colourless syrup is obtained. In fact, in patent ES 2060544 the disclosed process is not applicable to the food sector because of the type of chromatographic processes required.

Patent ES 2003566 discloses a method for obtaining a syrup from carob pulp, wherein the chopped seedless carob pulp is basically introduced into a diffuser through which an amount of water circulates and an aqueous extract is obtained after a specified period of time. This aqueous extract is concentrated by evaporation in order to obtain a syrup with the appropriate level of sugars in the form of a dense, brown syrup.

Lastly, patent ES2641963 describes a method for obtaining a carob syrup that involves aqueous extraction of the water-soluble components present in the carob pulp and their subsequent refining by means of different steps of ultrafiltration with membranes and adsorbents in order to separate the desired components from the undesired components.

Therefore, there is a need to develop novel sweeteners that are able to maintain sweetness in the food on which they are applied and, in addition, allow control of the absorption of simple sugars such as glucose after intake.

### References

1. Edwards CH, Rossi M, Corpe CP, Butterworth PJ, Ellis PR. The role of sugars and sweeteners in food, diet and health: Alternatives for the future. Trends Food Sci Technol [Internet]. 2016 Oct;56:158-66. Available from: http://dx.doi.org/10.1016/j.tifs.2016.07.008.
2. Navarro JA, Díaz C, Decara J, Medina-Vera D, Lopez-Gambero AJ, Suarez J, et al. Pharmacokinetics and Endocrine Effects of an Oral Dose of D-Pinitol in Human Fasting Healthy Volunteers. Nutrients [Internet]. 2022 Oct 1;14(19):4094. Available from: https://www.mdpi.com/2072-6643/14/19/4094
2. Witkowski M, Nemet I, Alamri H, Wilcox J, Gupta N, Nimer N, et al. The artificial sweetener erythritol and cardiovascular event risk. Nat Med [Internet]. 2023 Mar 27; 29(3):710-8. Available from: https://www.nature.com/articles/s41591-023-02223-9.
4. Thomson MAARJ. Guideline: Sugars intake for adults and children. World Heal Organ. 2018;57(6):1716-22.
5. Panel E, Nda A, Vieille S La, Marchelli R, Martin A, Naska A, et al. Scientific Opinion on the substantiation of a health claim related to non digestible carbohydrates and a reduction of post prandial glycaemic responses pursuant to Article 13(5) of Regulation (EC) No 1924/2006. EFSA J. 2014;12(1):1-13.

### DESCRIPTION OF THE INVENTION

The sweeteners of the present invention are obtained from chopped carob pod (*Ceratonia siliqua L.*)*,* in liquid syrup form.

The present invention relates to a method for obtaining a syrup comprising the steps described below:
1. aqueous infusion of carob pods
2. pressing
3. coarse filtering and
4. concentration, obtaining a syrup 1.
   1 Infusion. The infusion step can be carried out by chopping the carob pod and introducing the pod into a reactor with a chopped pod to water ratio of 1 to 8 litres of water per kilogram of chopped pod, preferably 1 to 4.5 (pod/water), at a temperature between 20 and 70°C, preferably between 20 and 40°C, and more preferably at 37°C and for between 20 and 100 minutes, preferably between 80 and 95 minutes, and more preferably 90 minutes.
      In step 1, the water-soluble components are obtained from the carob pod.
   2. Pressing. The high water retention capacity of the carob pod makes it necessary to have a step for separating the aqueous solution from the residual plant organic matter, so as to obtain an adequate yield from the aqueous infusion step.
      The pressing step can be carried out in particular by means of a roller press and a piston press, the first working continuously and the second working discontinuously. The temperature for this pressing operation is between 15 and 35°C and the times depend on the type of press used.
   3. Coarse filtering. The aqueous solution obtained after the pressing operation still contains a significant amount of solids of varying sizes that must be removed so that the final syrup obtained is free of suspended particles. For this purpose, the aqueous solution obtained from the pressing is filtered.
      The coarse filtering step can be carried out using sieves between 300 and 40 microns, preferably between 200 and 300 microns.
   4. Concentration. The juice from the previous step, having 9-10 degrees Brix, is concentrated by evaporating water to 65-75 degrees Brix. A falling-film vacuum concentrator is used for this purpose, which prevents the carob juice from suffering from thermal stress by not exceeding temperatures of between 55 and 60°C. The carob syrup obtained in this step is called syrup 1 (PRO-SWEET R).

The syrup called syrup 1 (PRO-SWEET R) can be further treated to obtain other syrups.

According to particular embodiments, after the concentration step, the method comprises a treatment of syrup 1 (PRO-SWEET R) with an enzyme with β-fructofuranosidase activity, EC 3.2.1.26, which breaks the β-D-1,2-glycosidic bond present in sucrose and releases an equimolar mixture of glucose and fructose, obtaining PRO-SWEET H syrup.

More particularly, the enzymatic treatment to transform PRO-SWEET R syrup into PRO-SWEET H is carried out by adding between 0.1 and 2 g of enzyme EC 3.2.1.26 per kilogram of PRO-SWEET R syrup, for example, 0.5 grams per kilogram of PRO-SWEET R syrup.

The enzymatic treatment to transform PRO-SWEET R syrup into PRO-SWEET H can be carried out in a batch reactor. The reaction mixture of PRO-SWEET R syrup and enzyme is kept at a temperature of 60°C for a period of 4 to 12 hours and finally heated to between 70 and 100°C, preferably up to 95°C. The final heating time to inactivate the enzyme may be between 5 and 20 minutes, preferably between 10 and 15 minutes, and more preferably for 10 minutes.

In this enzymatic treatment step, the presence of sucrose is removed from the PRO-SWEET R syrup, obtaining a balanced amount of glucose and fructose without modifying the other components of the syrup.

According to particular embodiments, after the concentration step, the method comprises treating PRO-SWEET R syrup with a β-fructofuranosidase enzyme with fructosyl transferase activity (EC 3.2.1.26) so that this enzyme is able to break the β-D-1,2-glycosidic bond present in a sucrose molecule and subsequently transfer the released fructose molecule to a new sucrose molecule that will be converted into 1-kestose (GF2), the simplest molecule of the short-chain fructooligosaccharides (scFOS). This process of transferring fructose molecules from sucrose cleavage will continue to eliminate the presence of sucrose from the syrup and obtain a mixture of short-chain fructooligosaccharides, mainly 1-kestose (GF2), nystose (GF3) and fructosyl-nystose (GF4). In this step, a product is obtained, herein called syrup 3, or PRO-SWEET FOS.

According to particular embodiments, the enzymatic treatment to transform PRO-SWEET R syrup into PRO-SWEET FOS is carried out in a batch reactor where 1-3 grams of an enzyme with β-fructofuranosidase activity and fructosyltransferase capacity is added per kilogram of PRO-SWEET R syrup; this reaction mixture is kept at a temperature of 40-60°C, preferably at 55°C, for a period of 20 and 26 hours, preferably for 24 hours, and finally heated to 70-100°C for 10-20 minutes to inactivate the enzyme, preferably at 95°C.

These syrups obtained by the method of the invention contain natural bioactive compounds such as polyphenols (natural antioxidants) and D-Pinitol, a polyol that regulates post-prandial insulin secretion.

The PRO-SWEET syrups called syrup 1, syrup 2 and syrup 3 are syrups obtained from the aqueous infusion of the carob pulp (*Ceratonia siliqua L.*) which, after concentration and processing with various enzymatic treatments, makes it possible to obtain carob syrups with different contents of sugars, as well as polyphenols and D-pinitol.

The present invention also relates to a syrup obtained by the method defined above, comprising natural, refined water-soluble polyphenols, carbohydrates and micronutrients from carob pods.

More particularly, the syrup obtained by the method defined above comprises:
Sucrose: 20-55%
Glucose: 5-20%
Fructose: 2-18%
Other sugars: 0.3-5%
Cyclitols (mainly O-Pinitol): 6-19%
Potassium: 0.4-3.5%
Phenolic compounds (flavonoids, glycosylated flavanols and hydrolysable tannins): 0.35-4%
Organic and inorganic impurities: 0.3-8%.

According to particular embodiments, the syrup (PRO-SWEET R), syrup 1, comprises a characteristic content of simple sugars, polyphenols and D-Pinitol; more specifically, it has a content of sucrose between 25-45%, glucose between 4-10%, fructose between 5-10%, D-pinitol between 6-10% and a total phenolic compound content (phenolic acids, flavonoids, glycosylated flavanols and hydrolysable tannins) between 0.8 and 2%.

According to particular embodiments, the syrup (PRO-SWEET H), syrup 2, is a carob syrup containing a balanced mixture of glucose and fructose, with a content of sucrose of less than 0.5%, glucose between 20-25%, fructose between 20-25%, D-pinitol between 6-10% and a total phenolic compound content (phenolic acids, flavonoids, glycosylated flavanols and hydrolysable tannins) between 0.8 and 2%.

According to particular embodiments, the syrup (PRO-SWEET FOS), syrup 3, is a carob syrup containing a mixture of short-chain fructooligosaccharides that are considered to be soluble fibre with prebiotic activity. It has a content of sucrose of less than 0.5%, glucose between 15-20%, fructose between 3-5%, D-pinitol between 6-10%, a total phenolic compound content (phenolic acids, glycosylated flavanols and hydrolysable tannins) between 0.8 and 2% and between 5-7% of short-chain fructooligosaccharides (scFOS), which have between 10 and 30 fructose monomers, preferably 20. This syrup is characterised in that it is the only syrup containing between 5-7% of short-chain fructooligosaccharides (scFOS) in its composition.

These carob syrups sweeten food and, due to their composition, control the absorption of simple sugars such as glucose after intake. The presence of polyphenols and D-pinitol play an important role in this control together with the different simple sugar profiles of the different syrups obtained. Specifically, in the carob syrup called PRO-SWEET FOS, the sugar content is partially replaced by non-digestible carbohydrates (scFOS). In particular, it achieves partial replacement of simple sugars by fructooligosaccharides. This replacement is in line with EFSA's proposal to use novel sweeteners to reduce the amounts of sugar in foods and beverages.

### BRIEF DESCRIPTION OF THE FIGURES

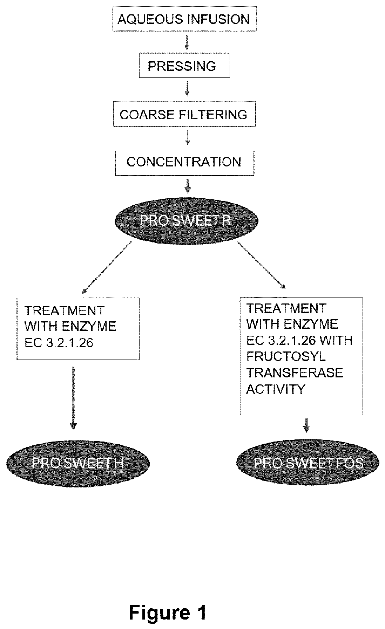

**Figure 1****:** shows a diagram of the steps of the method of the invention.

### EXAMPLES

### EXAMPLE 1

### Obtaining a syrup 1, PRO-SWEET R and characterisation

### 1. Infusion

- Raw material: Chopped carob pod
- Pod/water ratio: 1 kg of chopped pod per 4.5 litres of water
- Temperature: 37°C
- Time: 90 minutes

Description: Carob pods are chopped and placed in a reactor with water at a ratio of 1 kg of pods to 4.5 litres of water. The mixture is kept at a temperature of 37°C for 90 minutes to extract the water-soluble components from the pod.

### 2. Pressing

- Type of press: Screw press
- Temperature: 25°C

Description: The aqueous solution obtained from the infusion step is separated from the residual organic matter by a screw press, operating at a temperature of 25°C. This process ensures an adequate yield from the aqueous infusion.

### 3. Coarse filtering

- Sieves: 250 microns

Description: The aqueous solution resulting from pressing is filtered using 250 micron sieves to remove solids of varying sizes and to obtain a solution free of suspended particles.

### 4. Concentration

- Initial degrees Brix: 9 degrees Brix
- Final degrees Brix: 70 degrees Brix
   - Temperature: 58°C

Description: The juice obtained after filtering is concentrated by evaporating water until it reaches 70 degrees Brix. A falling-film vacuum concentrator is used, keeping the temperature between 55 and 60°C to prevent the juice from suffering from thermal stress.

The experimental values for total polyphenol content (TPC), D-pinitol, sucrose, glucose and fructose from 3 syrups obtained independently were determined according to the established conditions (table 1).

**Table 1. Sugar profile and total polyphenol content (TPC) obtained in PRO-SWEET R syrups**

| Assay | Glucose (g/100ml) | Fructose (g/100ml) | Sucrose (g/100ml) | D-Pinitol (g/100ml) | TPC (g/100ml)) |
|---|---|---|---|---|---|
| **43S** | 7.94 | 6.36 | 29.13 | 8.29 | 1.42 |
| **44S** | 6.15 | 7.13 | 36.68 | 7.91 | 0.89 |
| **47S** | 9.40 | 8.21 | 29.46 | 9.40 | 1.42 |

| | | | | | |
|---|---|---|---|---|---|
| 43S, 44S and 47S: internal references | | | | | |

### EXAMPLE 2

### Obtaining the syrup 2, PRO-SWEET H

### 1. Infusion

Raw material: Chopped carob pod
Pod/water ratio: 1 kg of chopped pod per 6 litres of water
Temperature: 25°C
Time: 80 minutes
Description: Carob pods are chopped and placed in a reactor with water at a ratio of 1 kg of pods to 7 litres of water. The mixture is kept at a temperature of 25°C for 80 minutes to extract the water-soluble components from the pod.

### 2. Pressing

Type of press: Screw press
Temperature: 20°C
Description: The aqueous solution obtained from the infusion step is separated from the residual organic matter by a screw press, operating at a temperature of 20°C. This process ensures an adequate yield from the aqueous infusion.

### 3. Coarse filtering

Sieves: 150 microns
Description: The aqueous solution resulting from pressing is filtered using 150 micron sieves to remove solids of varying sizes and to obtain a solution free of suspended particles.

### 4. Concentration

Initial degrees Brix: 10 degrees Brix
Final degrees Brix: 65 degrees Brix
Temperature: 57°C

Description: The juice obtained after filtering is concentrated by evaporating water until it reaches 65 degrees Brix. A falling-film vacuum concentrator is used, keeping the temperature between 55 and 60°C to prevent the juice from suffering from thermal stress.

The syrup obtained is treated enzymatically with a food-grade invertase, also known as β-fructofuranoside fructohydrolase, (a glycosyl hydrolase enzyme that catalyses the hydrolysis of sucrose into glucose and fructose), for 4 hours at a temperature of 60°C. The results obtained are shown in tables 2-3 and show that it is possible to break down all the sucrose in the syrup in order for it to be transformed into glucose and fructose.

**Table 2. Sugar profile obtained from the incubation of carob syrups in the presence of food-grade invertase enzyme.**

| Assay | Temperature (°C) | Time (min) | INVERTASE (g/kg) | Glucose (g/100ml) | Fructose (g/100ml) | Sucrose (g/100ml) |
|---|---|---|---|---|---|---|
| **SOSWEET-H** | 60 | 240 | 0.5 | 25.06 | 24.30 | 0.00 |

**Table 3. D-Pinitol content and TPC in carob syrups incubated in the presence of food-grade invertase enzyme.**

| Assay | Temperature (°C) | Time (min) | INVERTASE (g/kg) | TPC (g/100ml) | D-Pinitol (g/100ml) |
|---|---|---|---|---|---|
| **1SE** | 60 | 240 | 0.5 | 2.00 | 8.35 |

### EXAMPLE 3

### Obtaining the syrup 3, PRO-SWEET FOS

### 1. Infusion

- Raw material: Chopped carob pod
- Pod/water ratio: 1 kg of chopped pod per 5 litres of water
- Temperature: 38°C
- Time: 90 minutes

Description: Carob pods are chopped and placed in a reactor with water at a ratio of 1 kg of pods to 5 litres of water. The mixture is kept at a temperature of 38°C for 90 minutes to extract the water-soluble components from the pod.

### 2. Pressing

- Type of press: Screw press
- Temperature: 25°C

Description: The aqueous solution obtained from the infusion step is separated from the residual organic matter by a screw press, operating at a temperature of 25°C. This process ensures an adequate yield from the aqueous infusion.

### 3. Coarse filtering

- Sieves: 250 microns

Description: The aqueous solution resulting from pressing is filtered using 250 micron sieves to remove solids of varying sizes and to obtain a solution free of suspended particles.

### 4. Concentration

- Initial degrees Brix: 9 degrees Brix
- Final degrees Brix: 69 degrees Brix
- Temperature: 58°C

Description: The juice obtained after filtering is concentrated by evaporating water until it reaches 70 degrees Brix. A falling-film vacuum concentrator is used, keeping the temperature between 55 and 60°C to prevent the juice from suffering from thermal stress.

The syrup obtained is treated with an enzyme with β-fructofuranosidase activity and fructosyltransferase capacity to obtain PROSWEET FOS. The characteristics are shown in tables 4 and 5:

**Table 4**

| Assay | Temperature (°C) | Time (h) | Enzyme (g/kg) | Glucose (g/100ml) | Fructose (g/100ml) | Sucrose (g/100ml) | scFOS (g/100ml) |
|---|---|---|---|---|---|---|---|
| | 55 | 24 | 1.13 | 18.73 | 8.23 | 0.26 | 6.98 |

Table 4. Sugar profile obtained from the incubation of carob syrups in the presence of food-grade invertase enzyme.

**Table 5**

| **Assay** | **Temperature (°C)** | **Time (h)** | **Enzyme (g/kg)** | **TPC (g/100ml))** | **D-Pinitol (g/100ml)** |
|---|---|---|---|---|---|
| | 55 | 24 | 1.13 | 0.88 | 7.96 |

Table 5. D-Pinitol content and TPC in carob syrups incubated in the presence of food-grade invertase enzyme.

## Claims

1. A method for obtaining a syrup, comprising the steps described below:
1. aqueous infusion of carob pods
2. pressing
3. coarse filtering
4. concentration obtaining a syrup 1.

2. The method according to claim 1, wherein the infusion step comprises treating the chopped carob pod in a batch reactor, with a chopped pod to water ratio of 1 to 8 litres of water per kilogram of chopped pod, at a temperature between 20 to 70°C for between 20 and 100 minutes.

3. The method according to claim 1, wherein the pressing step comprises the use of industrial roller and piston presses, the first working continuously and the second working discontinuously, at a temperature for this pressing operation of between 15 and 35°C.

4. The method according to claim 1, wherein the coarse filtrating step comprises separating solids from the aqueous solution obtained after the pressing operation, by filtering the aqueous solution through sequentially arranged sieves, from 300 microns to about 40 microns, preferably sieves between 200 and 300 microns.

5. The method according to claim 1, wherein the concentration step comprises evaporating water to 65-75 degrees Brix, preferably by means of a falling-film vacuum concentrator.

6. The method according to claim 1, further comprising a treatment, after the concentration step, with an enzyme with β-fructofuranosidase activity, which breaks the β-D-1,2-glycosidic bond present in sucrose and releases an equimolar mixture of glucose and fructose, obtaining a syrup 2.

7. The method according to claim 6, wherein the enzymatic treatment is carried out by adding between 0.1 and 2 g of the enzyme with β-fructofuranosidase activity per kilogram of syrup 1.

8. The method according to claim 6 or 7, comprising keeping the reaction mixture consisting of the enzyme and syrup 1 at a temperature of 60°C for a period of 4 to 12 hours and then heating to 95°C to inactivate the enzyme.

9. The method according to claim 1, comprising, after the concentration step, a treatment of syrup 1 with a β-fructofuranosidase enzyme with fructosyl transferase activity.

10. The method according to claim 9, wherein a batch reactor is used, where 1-3 grams of is added per kilogram of syrup 1; the reaction mixture is kept at a temperature of 40-60°C for a period of 20 to 26 hours and finally heated to 70-100°C for 10-20 minutes to inactivate the enzyme.

11. A syrup obtained by the method defined in any one of the preceding claims, comprising natural, refined water-soluble polyphenols, carbohydrates and micronutrients from carob pods.

12. The syrup according to claim 11, comprising:
sucrose: 20-55%
glucose: 5-20%
fructose: 2-18%
other sugars: 0.3-5%
cyclitols: 6-19%, preferably O-Pinitol
potassium: 0.4-3.5%
phenolic compounds selected from flavonoids, glycosylated flavanols, tannins and mixtures thereof: 0.35-4% and
organic and inorganic impurities: 0.3-8%.

13. The syrup according to claim 10, comprising
- sucrose between 25-45%,
- glucose between 4-10%,
- fructose between 5-10%,
- D-pinitol between 6-10% and
- a total phenolic compound content (phenolic acids, flavonoids, glycosylated flavanols and hydrolysable tannins) between 0.8 and 2%.

14. The syrup according to claim 11, which is a carob syrup comprising:
- sucrose less than 0.5%,
- glucose between 20-25%,
- fructose between 20-25%,
- D-pinitol between 6-10% and
- a total phenolic compound content between 0.8 and 2%.

15. The syrup according to claim 11, which is a carob syrup comprising:
- sucrose less than 0.5%,
- glucose between 15-20%,
- fructose between 3-5%,
- D-pinitol between 6-10%,
- a total phenolic compound content (phenolic acids, glycosylated flavanols and hydrolysable tannins) between 0.8 and 2%
- and between 5-7% of short-chain fructooligosaccharides.

16. Use of the syrup defined in any one of claims 10 to 15, in the food industry, preferably in the production of beverages, ice cream or confectionery products.
